(19) Europäisches Patentamt
European Patent Office
Office européen des brevets

(11) **EP 4 159 900 A1**

(12) **EUROPEAN PATENT APPLICATION**
published in accordance with Art. 153(4) EPC

(43) Date of publication:
05.04.2023 Bulletin 2023/14

(51) International Patent Classification (IPC):
*D01F 2/02* (2006.01)     *B29B 15/10* (2006.01)
*C08B 16/00* (2006.01)     *B29K 105/08* (2006.01)

(21) Application number: 21812484.0

(22) Date of filing: 25.05.2021

(52) Cooperative Patent Classification (CPC):
**B29B 15/10; C08B 16/00; D01F 2/02; Y02W 30/62**

(86) International application number:
**PCT/JP2021/019707**

(87) International publication number:
**WO 2021/241539 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.05.2020 JP 2020093015

(71) Applicant: **MITSUBISHI GAS CHEMICAL
COMPANY, INC.**
**Chiyoda-ku**
**Tokyo 100-8324 (JP)**

(72) Inventors:
• **AOYAMA Kimihiro**
**Tokyo 125-0051 (JP)**
• **MIZUSAKA Tetsuhiko**
**Tokyo 125-0051 (JP)**

(74) Representative: **Hoffmann Eitle
Patent- und Rechtsanwälte PartmbB
Arabellastraße 30
81925 München (DE)**

(54) **CELLULOSE FIBERS, FIBER-REINFORCED RESIN COMPOSITION, METHOD FOR PRODUCING CELLULOSE FIBERS, AND METHOD FOR PRODUCING FIBER-REINFORCED RESIN COMPOSITION**

(57)     Provided are a cellulose fiber containing cellulose II, the cellulose fiber having improved heat resistance, as well as a fiber reinforced resin composition, a method for producing the cellulose fiber, and a method for producing the fiber reinforced resin composition. The cellulose fiber contains the cellulose II having a content of an imidazolium salt of 1% by mass or less.

Fig. 1

EP 4 159 900 A1

**Description**

[Technical Field]

The present invention relates to a cellulose fiber, a fiber reinforced resin composition, a method for producing the cellulose fiber, and a method for producing the fiber reinforced resin composition. Particularly, the present invention relates to the cellulose fiber using regenerated cellulose.

[Background Art]

Fiber composite materials containing high strength and high modulus fibers such as glass fibers to enhance strength and stiffness of plastics have been used in a variety of fields of automobile parts, sporting goods, building materials, miscellaneous goods, etc.

A glass fiber reinforced resin material, which has been used as a light weight high strength material, demonstrates excellent characteristics in use. However, when the glass fiber is used as a reinforcing fiber, residues are left during disposal, thereby generating a large burden on the environment.

Further, also on a printed wiring board, to improve insulation properties and stiffness, the glass fiber is used as a base material. Even here, however, when the glass fiber is used, residues are left during disposal, thereby generating a large burden on the environment.

Then, as for the reinforcing fiber to replace the glass fiber, particularly as for the reinforcing fiber for the fiber reinforced resin materials, it has been studied to use a cellulose fiber.(Patent Literature 1, Patent Literature 2)

[Citation List]

[Patent Literature]

[Patent Literature 1] International Publication No. WO 2019/066069
[Patent Literature 2] International Publication No. WO 2019/066070

[Summary of Invention]

[Technical Problem]

Cellulose is abundant in nature, and used in a variety of fields. Here, it is known that cellulose has different crystal structures between natural cellulose and regenerated cellulose. More specifically, the natural cellulose has the crystal structure of cellulose I and the regenerated cellulose has that of cellulose II. And, as a result of studies of the inventor, it has been found that the cellulose fiber composed of the cellulose II tends to be poor in heat resistance.

An objective of the present invention is to solve such a problem, i.e., to provide a cellulose fiber containing the cellulose II, the cellulose fiber having improved heat resistance, as well as a fiber reinforced resin composition using the cellulose fiber, a method for producing the cellulose fiber and a method for producing the fiber reinforced resin composition.

[Solution to Problem]

Under the above-mentioned problem, as a result of studies by the present inventor, by setting a content of an imidazolium salt in the cellulose fiber at 1% by mass or less, the above-mentioned problem has been solved. Specifically, the above-mentioned problem has been solved by the following means.

<1> A cellulose fiber comprising cellulose II, wherein a content of an imidazolium salt is 1% by mass or less.
<2> The cellulose fiber according to <1>, wherein the cellulose fiber is formed from a cellulose solution comprising cellulose raw material and the imidazolium salt.
<3> The cellulose fiber according to <1> or <2>, wherein the imidazolium salt is 1-alkyl-3-methylimidazolium chloride, and the alkyl has carbon atoms of 2 or more and 6 or less.
<4> The cellulose fiber according to any one of <1> to <3>, wherein the content of the imidazolium salt is 0.01% by mass or more.
<5> The cellulose fiber according to any one of <1> to <4>, wherein the cellulose fiber has 5% weight reduction temperature of 280°C or more.

<6> A fiber reinforced resin composition comprising a resin and the cellulose fiber according to any one of <1> to <5>.

<7> A method for producing a cellulose fiber comprising: immersing a cellulose solution comprising cellulose raw material and an imidazolium salt in a coagulating liquid; and spinning; and the cellulose fiber comprising the imidazolium salt at a rate of 1% by mass or less.

<8> The method for producing a cellulose fiber according to <7>, wherein a content of the imidazolium salt in the cellulose fiber is 0.01% by mass or more.

<9> A method for producing a fiber reinforced resin composition comprising impregnating the cellulose fiber according to any one of <1> to <5> into in a resin, or kneading the cellulose fiber according to any one of <1> to <5> with in a resin.

[Effects of Invention]

According to the present invention, it has become possible to provide the cellulose fiber containing the cellulose II, the cellulose fiber having improved heat resistance, as well as the fiber reinforced resin composition using the cellulose fiber, the method for producing the cellulose fiber and the method for producing the fiber reinforced resin composition.

[Brief Description of Drawing]

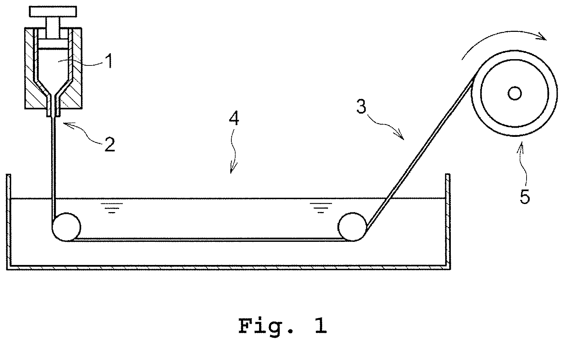

[Figure 1] Figure 1 is one instance of a schematic drawing showing equipment for producing a cellulose fiber.

[Description of Embodiments]

Hereinafter, embodiments of the present invention (hereinafter simply referred to as "present embodiments") will be described in detail. Here, the following present embodiments are exemplifications to explain the present invention, but the present invention is not limited to only the present embodiments.

Here, in the present description, "to" is used to mean that numerals recited before and after that symbol are included as a lower limit value and an upper limit value.

In the present description, each kind of physical property values and characteristic values is that measured at 23°C as far as not particularly described.

In the present description, ppm means ppm by mass.

In the present description, Me indicates a methyl group; and Bu indicates a butyl group.

A cellulose fiber in the present embodiments comprises cellulose II, a content of an imidazolium salt being 1% by mass or less. With such a composition, the cellulose fiber excellent in heat resistance can be obtained.

As described above, the cellulose fiber containing the cellulose II tends to have poor heat resistance. In the present embodiments, it is speculated that it is succeeded to improve the heat resistance of the cellulose fiber containing the cellulose II by reducing the content of the imidazolium salt.

The cellulose fiber of the present embodiments contains the cellulose II.

In the cellulose used in the present embodiments, its type, etc. are not limited as far as it has a crystal structure of the cellulose II. The cellulose II is cellulose containing the crystal structure formed by dissolving the cellulose in a solvent and solidifying again, and distinguished from a crystalline structure (cellulose I) which natural cellulose has.

In the cellulose fiber of the present embodiments, a ratio of the cellulose II with respect to a total of the cellulose I and the cellulose II in the cellulose crystals (crystal fraction of the cellulose II) accounts for preferably 90% by mass or more, more preferably 95% by mass or more, even more preferably 98% by mass or more, and may account for 99% by mass or more. Also, the cellulose fiber of the present embodiments may contain cellulose crystals other than the cellulose II to the extent that the subject matter of the present embodiments is not deviated. In the cellulose fiber of the present embodiments, a ratio of the cellulose crystals other than the cellulose II is, e.g., 10% by mass or less, preferably 5% by mass or less, more preferably 3% by mass or less, even more preferably 1% by mass or less.

The crystal fraction of the cellulose II can be measured by the following method.

The crystal structure of the cellulose fiber is confirmed by using an X-ray diffraction measurement apparatus after powdering the cellulose fiber by freezing and pulverizing. Measurement conditions are as follows. X-ray output: 40 kV, 15 mA, measurement range: diffraction angle $2\theta$ = 5 to 45°, and scanning speed of X-ray: 10°/min. From X-ray diffraction intensity obtained, the crystal fraction of the cellulose II can be calculated based on the following expression.

$$\text{Crystal fraction of cellulose II (\% by mass)} = [2I_{II} / (I_I + 2I_{II})] \times 100$$

wherein $I_{II}$ represents the diffraction intensity of a lattice plane (1, -1, 0) (diffraction angle $2\theta$ = 12.0°) of the cellulose II crystal, and $I_I$ represents the sum of the diffraction intensity of a lattice plane (1, -1, 0) (diffraction angle $2\theta$ = 14.9°) and

the diffraction intensity of a lattice plane (1, 1, 0) (diffraction angle 2θ = 16.6°) of the cellulose I crystal.

As the X-ray diffraction measurement apparatus, "MiniFlex600" produced by Rigaku Corporation can be used.

In the cellulose fiber in the present embodiments, the content of the imidazolium salt is 1% by mass or less, preferably 0.8% by mass or less, more preferably 0.7% by mass or less, even more preferably 0.65% by mass or less, still more preferably 0.5% by mass or less, even still more preferably 0.4% by mass or less, further even still more preferably 0.3% by mass or less. Setting it to the upper limit or less can provide the cellulose fiber with improved heat resistance.

In the cellulose fiber in the present embodiments, further, the content of the imidazolium salt is preferably 0.01% by mass or more, more preferably 0.02% by mass or more, even more preferably 0.05% by mass or more, still more preferably 0.08% by mass or more, even still more preferably 0.1% by mass or more. Thus, containing a trace amount of the imidazolium salt in the cellulose fiber tends to provide it with maintenance of a smooth surface effectively and improvement of handling.

The cellulose fiber of the present embodiments may contain only one or more of the imidazolium salts. In case of containing 2 or more, it is preferable that a total amount is in the above range.

The imidazolium salt in the present embodiments is normally an ionic liquid, and preferably is a salt composed of a cation having an imidazole ring and an anion. Examples of the anion include chloride anion, bromide anion, acetate anion, phosphate anion, propionate anion, formate anion, and preferably the chloride anion and the bromide anion, more preferably the chloride anion.

The imidazolium salt of the present embodiments has preferably 100 to 500 of a molecular weight.

Examples of the imidazolium salt of the present embodiments include 1-alkyl-3-methylimidazolium chloride, 1-ethyl-3-methylimidazolium acetate, 1-ethyl-3-methylimidazoliumdiethyl-phosphate, 1-butyl-3-methylimidazolium acetate, 1-butyl-3-methylimidazolium propionate, 1-butyl-3-methylimidazolium formate, 1-butyl-3-methylimidazoliumdimethyl phosphate, 1,3-dimethylimidazolium acetate, 1-ethyl-3-methylimidazolium propionate, 1-ethyl-3-methylimidazolium formate, 1-ethyl-3-methylimidazolium bromide, 1-ethyl-3-methylimidazoliumdimethyl phosphate, 1-aryl-3-methylimidazolium chloride, etc., and preferably 1-alkyl-3-methylimidazolium chloride.

An alkyl in the 1-alkyl-3-methylimidazolium chloride has preferably carbon atoms of 2 or more and 6 or less. It is preferable that an alkyl group which the 1-alkyl-3-methylimidazolium chloride has is a butyl group. The butyl group may be any one of t-butyl group, n-butyl group, sec-butyl group, and isobutyl group, but preferably n-butyl group. The 1-alkyl-3-methylimidazolium chloride is more preferably 1-butyl-3-methylimidazolium chloride.

In the present embodiments, a method for obtaining the imidazolium salt such as 1-alkyl-3-methylimidazolium chloride is not limited, but a known technology can be utilized. For example, 1-alkyl-3-methylimidazolium chloride can be obtained from a reaction product of 1-methyl imidazole and RCl (R is an alkyl group having 2-6 carbon atoms).

In the present embodiments, the imidazolium salt is incorporated into the cellulose fiber by forming the cellulose fiber from a cellulose solution containing, e.g., cellulose raw material and the imidazolium salt. Details of a method for producing the cellulose fiber of the present embodiments will be described later.

It is preferable in the cellulose fiber of the present embodiments that weight reduction temperature is high.

Specifically, 3% weight reduction temperature of the cellulose fiber of the present embodiments is preferably 268°C or more, more preferably 270°C or more, even more preferably 273°C or more, still more preferably 275°C or more, even still more preferably 278°C or more. Also, an upper limit of the 3% weight reduction temperature of the cellulose fiber of the present embodiments is not limited, but practically e.g., 380°C or less, even 330°C or less.

Further, 5% weight reduction temperature of the cellulose fiber of the present embodiments is preferably 280°C or more, more preferably 285°C or more, even more preferably 287°C or more, still more preferably 290°C or more, even still more preferably 295°C or more. Also, an upper limit of the 5% weight reduction temperature of the cellulose fiber of the present embodiments is not limited, but practically e.g., 390°C or less, even 340°C or less.

Furthermore, 10% weight reduction temperature of the cellulose fiber of the present embodiments is preferably 290°C or more, more preferably 292°C or more, even more preferably 297°C or more, still more preferably 300°C or more, even still more preferably 305°C or more, further even still more preferably 310°C or more. Also, an upper limit of the 10% weight reduction temperature of the cellulose fiber of the present embodiments is not limited, but practically e.g., 400°C or less, even 350°C or less.

The weight reduction temperature is measured in accordance with a method described in Examples later.

Next, described is a method for producing the cellulose fiber of the present embodiments. The cellulose fiber of the present embodiments can be produced by a known method, but it is preferable that it is produced by immersing the cellulose solution containing the cellulose raw material and the imidazolium salt in a coagulating liquid, and spinning. The content of the imidazolium salt in the cellulose fiber is as described in the description of the aspects of the cellulose fiber of the present embodiments.

In the method for producing the cellulose fiber of the present embodiments, the content of the imidazolium salt in the cellulose solution containing the cellulose raw material and the imidazolium salt (hereinafter simply referred to as "cellulose solution") is preferably 80% by mass or more, more preferably 83% by mass or more, even more preferably 86% by mass or more. Also, the content of the imidazolium salt in the cellulose solution is preferably 99% by mass or less, more preferably 97% by mass or less, even more preferably 95% by mass or less, still more preferably 93% by mass or less. In the cellulose solution, further, the imidazolium salt accounts for preferably 90% by mass or more of the solvent contained in the cellulose solution, more preferably 95% by mass or more, even more preferably 98% by mass or more, and still more preferably 99% by mass or more. Only one or more imidazolium salts may be used. In case of using two or more, it is preferable that a total amount is in the above range.

In addition, for more details on the imidazolium salt, they are like the matters described in the description of the aspects of the cellulose fiber of the present embodiments described above.

In the cellulose solution, a content of the cellulose raw material is preferably 1% by mass or more, more preferably 3% by mass or more, even more preferably 5% by mass or more, still more preferably 7% by mass or more. Also, in the cellulose solution, the content of the cellulose raw material is preferably 20% by mass or less, more preferably 17% by mass or less, even more preferably 14% by mass or less. Further, in the cellulose solution, only one or more types of the cellulose raw material may be used. In case of using two or more, it is preferable that a total amount is in the above range. The cellulose raw material in the cellulose solution may be the cellulose I or the cellulose II. Specifically, examples include pulp, cotton, cellulose in wood, rayon, cupra, lyocell, etc.

The cellulose solution may contain an aprotic polar solvent and/or a stabilizer in addition to the above. Examples of the aprotic solvent include dimethyl sulfoxide, pyridine, N,N-dimethylacetamide, N,N-dimethylformamide, N-methyl-2-pirolydone, etc. Examples of the stabilizer include pyrocatechine, pyrogallol, gallic acid, methyl ester gallate, ethyl ester gallate, propyl ester gallate, isopropyl ester gallate, ellagic acid, oxalic acid, phosphoric acid, sodium hexametaphosphate, tannin, tannic acid, etc.

In the cellulose solution, the cellulose raw material and the imidazolium salt account for preferably 98% by mass or more in total, and more preferably 99% by mass or more.

Hereinafter, the method for producing the cellulose fiber of the present embodiments will be explained in accordance with Figure 1. It is needless to say that the production method of the present embodiments should not be limited to these.

Figure 1 is one instance of a schematic drawing showing equipment for producing the cellulose fiber of the present embodiments, each of numeral numbers 1, 2, 3, 4 and 5 respectively denoting a cellulose solution, a nozzle, a cellulose fiber, a coagulating liquid, and a winding machine. Further, the equipment may have a washing bath, in which a washing liquid for washing the cellulose fiber produced is charged. Of course, the washing bath may be separate equipment.

In the present embodiments, the cellulose solution 1 is discharged from the nozzle 2. The cellulose solution 1 tends to have high viscosity and poor fluidity when it is discharged from the nozzle. Thus, to improve the fluidity, it is preferable that it is heated and discharged. A temperature of the cellulose solution at a time of discharge is preferably 70°C or more, more preferably 80°C or more. Setting it at 70°C or more tends to more improve the fluidity of the cellulose solution. Further, the upper limit of the temperature of the cellulose solution at the time of discharge is preferably 130°C or less, more preferably 120°C or less. Setting it at 130°C or less can more effectively suppress decomposition of cellulose.

Further, a diameter of the nozzle at the time of discharge can be set to e.g., 0.1 to 0.5 mm.

The fibrous cellulose solution discharged from the nozzle 2 is immersed in the coagulating liquid 4. By immersing it in the coagulating liquid, the fibrous cellulose solution is spun. Spinning may be any of a continuous system where a concentration of the solvent is held at a certain quantity or less while adding the coagulating liquid, or a batch system where the coagulating liquid is replaced when the concentration of the solvent in the coagulating liquid is increased to some extent or more. The solvent dissolved in the above coagulating liquid may be collected and again recycled to the production of the cellulose fiber.

An air gap until which the fibrous cellulose discharged from the nozzle 2 is entered in the coagulating liquid 4 is preferably 3 to 30 cm.

As the coagulating liquid, there can be used water in a temperature range of 0°C or more and 100°C or less, or a lower alcohol, a polar solvent, a nonpolar solvent, or the like in a temperature range of -40°C or more and 100°C or less. In consideration of economic efficiency and a work environment aspect, a solvent containing water is preferable.

During immersing in the coagulating liquid, or by means of subsequent washing, the solvent is eliminated from the cellulose solution spun, to obtain the cellulose fiber. It is preferable that the washing liquid is water.

In the present embodiments, a time for immersion in the coagulating solution and a time for immersion in the washing solution depend on the conditions of volumes, temperatures, etc. of these liquids, but are, at the total, preferably 0.1 second or more, more preferably 6 seconds or more. Setting it to the lower limit value or more can effectively reduce a quantity of the imidazolium salt in the cellulose fiber obtained. Also, an upper limit of the time for immersion in the coagulating solution is preferably 48 hours or less, more preferably 24 hours or less, and may further be 10 hours or less, 3 hours or less, 2 hours or less. Setting it to the upper limit value or less provides a trace amount of the imidazolium salt left in the cellulose fiber, to be possible to maintain a fiber surface in a smooth condition, thereby tending to further improve handling.

The time for immersing in the coagulating liquid is normally the same as the time for immersing in the washing liquid or the time less than that.

Further, one instance of the time for immersing in the washing liquid includes 30 seconds to 24 hours.

The cellulose fiber after immersing in the above coagulating liquid is winded by the winding machine 5. By adjusting a winding speed of the winding machine, the cellulose fiber obtained is stretched to be able to adjust a fiber diameter of the cellulose fiber. Besides the winding machine, a stretching roll etc. may be provided for stretching.

Further, a stretching ratio of the cellulose fiber is preferably 1 to 30, more preferably 3 to 20.

When the cellulose fiber is stretched by adjusting the winding speed with respect to the discharge speed of it from the nozzle, a ratio (the winding speed / the discharge speed) is preferably 10 to 100, more preferably 30 to 70.

Further, a number average fiber diameter of the cellulose fiber obtained is preferably 1 to 30 μm, more preferably 3 to 20 μm.

Next, applications of the cellulose fiber of the present embodiments will be described.

The cellulose fiber of the present embodiments can be widely used for known applications, but it is preferable that it is used as a reinforcement of the resin (fiber reinforced resin material). That is, exemplified is a fiber reinforced resin composition containing the resin and the cellulose fiber of the present embodiments. Examples of the fiber reinforced resin composition include one which the cellulose fiber of the present embodiments is impregnated in the resin (e.g., prepreg), and one which the cellulose fiber of the present embodiments is kneaded in the resin (e.g., resin pellets).

In the fiber reinforced resin composition of the present embodiments, a percentage of the resin is preferably 10 to 90% by mass (preferably 30 to 90% by mass), and a percentage of the cellulose fiber of the present embodiments is preferably 90 to 10% by mass (preferably 70 to 10% by mass).

Examples of the resin include a polyamide resin (nylon), a polyacetal resin, a polycarbonate resin, a polyvinylchloride resin, an ABS resin, a polysulfone resin, a polyethylene resin, a polypropylene resin, a polystyrene resin, a (meth)acrylic resin, and a fluorine resin; and examples of a thermosetting resin include an unsaturated polyester resin, an epoxy resin, a melamine resin, a phenolic resin. Further, in case that the fiber reinforced resin composition contains the thermosetting resin, an additive such as a shrinkage reducing agent, a flame retardant, a flame retardant auxiliary, a plasticizer, an antioxidant, an ultraviolet absorbent, a colorant, a pigment, and a filler may be contained as required.

Details of the fiber reinforced resin composition using the cellulose fiber of the present embodiments can refer to the description of Patent Literature 1 and Patent Literature 2, and these contents are incorporated in the present description.

[Examples]

Hereinafter, the present invention will be described in more specifically with reference to Examples. Materials, amounts used, ratios, processing details, processing procedures, etc. shown in the Examples below, can be changed as appropriate as far as the subject matter of the present invention is not deviated. Therefore, the scope of the present invention should not be limited to specific examples shown below.

In case that measurement equipment etc. used in Examples are difficult to be available because of disposition etc., measurements can be performed by using other equipment having equivalent performance.

Example 1

A dissolving pulp (manufactured by Nippon Paper Industries Co., Ltd. Product Number: NDPT) was added to 1-butyl-3-methylimidazolium chloride (BmimCl, manufactured by Sigma-Aldrich, Co. LLC. Product Number: 94128 (ionic liquid)) and stirred at 100°C, to prepare a cellulose solution having a concentration of 9% by mass.

From the cellulose solution prepared described above, a cellulose fiber was produced by using equipment as shown in Figure 1. That is, the cellulose solution 1 was charged in a syringe and discharged from a nozzle 2 having a nozzle diameter of 0.27 mm, to wind the cellulose fiber, which was immersed and coagulated in water (coagulating liquid 4), by a winding machine 5. After that, the cellulose fiber was again rolled out from the winding machine 5, and washed in water (washing liquid) for an immersion time shown in Table 1.

With respect to the cellulose fiber obtained, an amount of the imidazolium salt in the cellulose fiber and weight reduction temperature were measured as follows.

<Amount of Imidazolium Salt (amount of BmimCl)>

An amount of 1-butyl-3-methylimidazolium chloride (amount of BmimCl) which was an imidazolium salt contained in the cellulose fiber obtained was measured in accordance with the following method.

Equipment used was a trace amount total nitrogen analyzer "TN-2100H" manufactured by NittoSeiko Analytech Co., Ltd. It was set that a flow rate of an argon gas was 300 mL/min; and a flow rate of an oxygen gas was 300 mL/min.

Temperatures of an electric furnace were set at 800°C at an inlet, and 900°C at an outlet. A total nitrogen amount of the dissolving pulp used for a raw material was subtracted from the total nitrogen amount of each sample, and corrected by a nitrogen detecting rate of the BmimCl and a molecular weight 175, to calculate the amount of the BmimCl.

A unit of the amount of the imidazolium salt in the cellulose fiber was shown in % by mass.

<Weight Reduction Temperature>

When the cellulose fiber obtained was heated, a temperature at which the weight was reduced by 3% (3% weight reduction temperature), a temperature at which the weight was reduced by 5% (5% weight reduction temperature), and a temperature at which the weight was reduced by 10% (10% weight reduction temperature) were measured in accordance with the following method.

After a sample was dried at 100°C for 30 minutes, 10 mg was charged in an aluminum sample pan. The sample was heated in a nitrogen gas flow rate of 200 mL/min from room temperature to 400°C at a heating rate of 10°C/min. The weight at 100°C was used as a starting point, and each temperature at which the weight was reduced by 3%, 5%, and 10% was determined as a respective weight reduction temperature. A unit was shown in °C.

Equipment used was a thermal gravimetric differential thermal analyzer "TGDTA7220" manufactured by Hitachi High-Tech Corporation.

Examples 2, 3, Comparative Examples 1, 2

In Example 1, the immersion time in the water (washing liquid) was changed as shown in Table 1, and the rest was the same.

[Table 1]

|  | Comparative Example 1 | Comparative Example 2 | Example 1 | Example 2 | Example 3 |
|---|---|---|---|---|---|
| Amount of BmimCl (% by mass) | 8.08 | 2.70 | 0.61 | 0.27 | 0.23 |
| 3% Weight Reduction Temperature (°C) | 250 | 265 | 280 | 288 | 284 |
| 5% Weight Reduction Temperature (°C) | 258 | 276 | 291 | 300 | 299 |
| 10% Weight Reduction Temperature (°C) | 266 | 287 | 304 | 314 | 315 |
| Immersion Time (second) | 0 | 5 | 60 | 1800 | 7200 |

In any of the cellulose fiber obtained in Examples 1-3, when performing X-ray diffraction measurements, a peak of the cellulose I crystal was not observed, but a peak of the cellulose II crystal was observed.

[Reference Signs List]

1    cellulose solution
2    nozzle
3    cellulose fiber
4    coagulating liquid
5    winding machine

**Claims**

1.    A cellulose fiber comprising cellulose II, wherein a content of an imidazolium salt is 1% by mass or less.

2.    The cellulose fiber according to claim 1, wherein the cellulose fiber is formed from a cellulose solution comprising cellulose raw material and the imidazolium salt.

3. The cellulose fiber according to claim 1 or 2, wherein the imidazolium salt is 1-alkyl-3-methylimidazolium chloride, and the alkyl has carbon atoms of 2 or more and 6 or less.

4. The cellulose fiber according to any one of claims 1 to 3, wherein the content of the imidazolium salt is 0.01% by mass or more.

5. The cellulose fiber according to any one of claims 1 to 4, wherein the cellulose fiber has 5% weight reduction temperature of 280°C or more.

6. A fiber reinforced resin composition comprising a resin and the cellulose fiber according to any one of claims 1 to 5.

7. A method for producing a cellulose fiber comprising: immersing a cellulose solution comprising cellulose raw material and an imidazolium salt in a coagulating liquid; and spinning; and the cellulose fiber comprising the imidazolium salt at a rate of 1% by mass or less.

8. The method for producing a cellulose fiber according to claim 7, wherein a content of the imidazolium salt in the cellulose fiber is 0.01% by mass or more.

9. A method for producing a fiber reinforced resin composition comprising impregnating the cellulose fiber according to any one of claims 1 to 5 into in a resin, or kneading the cellulose fiber according to any one of claims 1 to 5 with in a resin.

Fig. 1

## INTERNATIONAL SEARCH REPORT

| | International application No. |
|---|---|
| | PCT/JP2021/019707 |

A. CLASSIFICATION OF SUBJECT MATTER
Int.Cl. D01F2/02(2006.01)i, B29B15/10(2006.01)i, C08B16/00(2006.01)i,
B29K105/08(2006.01)n
FI: D01F2/02, B29B15/10, C08B16/00, B29K105:08
According to International Patent Classification (IPC) or to both national classification and IPC

B. FIELDS SEARCHED

Minimum documentation searched (classification system followed by classification symbols)
Int.Cl. D01F2/00-2/30, B29B11/16, 15/08-15/14, C08J5/04-5/10, 5/24

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | US 9695525 B1 (KAUKLER, W. F.) 04 July 2017 (2017-07-04), claims, column 2, lines 58-60, column 5, lines 34-49, column 9, lines 4-14, examples | 1-9 |
| X<br>A | JP 2016-191020 A (DAIWABO HOLDINGS CO., LTD.) 10 November 2016 (2016-11-10), claims, paragraphs [0016], [0042] | 1, 6, 9<br>2-5, 7-8 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 July 2021 | 03 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/019707 |

```
US  9695525 B1      04 July 2017      (Family: none)

JP  2016-191020 A   10 November 2016  (Family: none)
```

Form PCT/ISA/210 (patent family annex) (January 2015)

11

**EP 4 159 900 A1**

**Patent documents cited in the description**

- WO 2019066069 A
- WO 2019066070 A